# EUROPÄISCHE PATENTSCHRIFT

(11) **EP 0 511 529 B1**
(45) Veröffentlichungstag und Bekanntmachung des Hinweises auf die Patenterteilung: **15.02.1995**
(21) Anmeldenummer: 92106115.6
(22) Anmeldetag: 09.04.1992
(51) Int. Cl.: B65G 61/00

(54) **Einrichtung zum Beladen von Paletten mit Kartons**
Installation for loading cartons onto pallets
Installation de chargement de palettes avec des cartons

(30) Priorität: 01.05.1991 DE 4114215
(43) Veröffentlichungstag der Anmeldung: 04.11.1992
(73) Patentinhaber: Focke & Co. (GmbH & Co.), 27283 Verden (DE)
(72) Erfinder: Focke, Heinz, D-27283 Verden (DE)
(74) Vertreter: Bolte, Erich, Dipl.-Ing.

(56) Entgegenhaltungen:
- DE-A- 2 227 835
- DE-A- 2 711 677

## Beschreibung

Die Erfindung betrifft eine Einrichtung zum Beladen von Paletten mit quaderförmigen Gegenständen, insbesondere Kartons, durch einen Palettierer mit zwei unabhängig voneinander, an Ständersäulen auf- und abbewegbaren Armen, an deren Enden jeweils ein Saugkopf oder dergleichen angeordnet ist, wobei die Gegenstände dem Palettierer auf mindestens einem Zuführförderer zuführbar sind.

Kartons verschiedener Formen und Größen werden für den Versand und die Lagerung auf Paletten gestapelt. Das Beladen der Paletten erfolgt mit selbständig arbeitenden Palettierern, die einen bewegbaren Gelenkarm mit Saugkopf oder mit einem anderen Halteorgan zum Erfassen der Kartons aufweisen. Für den Ladevorgang ist der Palettierer gegenüber der zu beladenden Palette so positioniert, daß der Gelenkarm die von einem Zuführförderer bereitgestellten Kartons aufnehmen und auf die Palette verladen kann.

Aus der DE-A-3 613 089 ist bekannt, daß die Arbeitsleistung eines Palettierers erhöht wird, wenn die zu verladenden Kartons über zwei getrennte Zuführförderer mit höhenverstellbaren Plattformen bereitgestellt werden. Dabei werden die Kartons aus der Zuführförderebene mittels Plattform auf eine Abnahmeebene befördert. Für den Gelenkarm des Palettierers verringert sich dadurch die für den Verladevorgang erforderliche Zeit für die Hubbewegung, was einer Erhöhung der Arbeitsleistung des Palettierers entspricht. Die Bereitstellung der zu verladenden Kartons über zwei getrennte Zuführförderer verringert die Wartezeiten zwischen den einzelnen Ladevorgängen.

Aus der den Oberbegriff bildenden DE-A-2 711 677 ist eine Einrichtung zum Beladen von Paletten bekannt, bei der zwei Greiferköpfe jeweils an Laufschienen verfahrbar und zusammen mit diesen vertikal bewegbar sind.

Aufgabe der vorliegenden Erfindung ist es, eine Palettiereinrichtung der eingangs genannten Art weiterzuentwickeln und zu verbessern und insbesondere die Flexibilität der Einrichtung bei möglichst geringem konstruktiven Aufwand zu erhöhen. Erfindungsgemäß wird die Aufgabe dadurch gelöst, daß die Arme des Palettierers als Gelenkarme ausgebildet sind, die jeweils an einem Führungsblock in einer horizontalen Ebene verschwenkbar gelagert sind, wobei jeder Führungsblock an je einer Ständersäule auf- und abbewegbar ist, und wobei beide Führungsblöcke außerdem an einer gemeinsamen aufrechten Stützsäule auf- und abwärts verfahrbar gelagert und durch diese zur Durchführung der Schwenkbewegungen abgestützt sind. Die Saugköpfe sind über die Gelenkarme horizontal verschwenkbar und mit den Führungsblöcken vertikal auf- und abbewegbar. Letztere sind an einer gemeinsamen Ständersäule gelagert, so daß der konstruktive Aufwand geringer ist, als etwa bei zwei unabhängig voneinander agierenden Palettierern mit je einem Gelenkarm.

Bei einem vorteilhaften Ausführungsbeispiel der Erfindung ist der Palettierer zwei mit Abstand voneinander angeordneten Zuführförderern für die Gegenstände bzw. Kartons zugeordnet. Jeder Gelenkarm bedient einen der Zuführförderer. Des weiteren ist bei diesem Ausführungsbeispiel dem Palettierer eine von beiden Gelenkarmen zu beladende Palette zugeordnet.

Die Gelenkarme sind nach einem weiteren Merkmal der Erfindung durch verstellbare mechanische oder elektrische Anschlagmittel hinsichtlich des Schwenkbereichs begrenzbar. Die Anschlagmittel werden dabei so eingestellt, daß bei veränderlichen Arbeitsbereichen bzw. Schwenkwinkeln der Gelenkarme eine Überschneidung der Arbeitsbereiche und damit eine wechselseitige Störung der Gelenkarme vermieden wird. Bei der Beladung einer gemeinsamen Palette sind die Anschlagmittel zweckmäßigerweise so eingestellt, daß jeder Gelenkarm eine Hälfte der Palette belädt.

Die zentrale Stützsäule ist vorzugsweise mit rechteckigem oder quadratischem Querschnitt versehen. An gegenüberliegenden Seiten der Stützsäule sind die Führungsblöcke der Gelenkarme abgestützt und bewegbar geführt. Die insoweit beschriebenen tragenden Organe des Palettierers sind nach einem weiteren Merkmal in einem gemeinsamen Sockel verankert.

Weitere Merkmale der Erfindung betreffen die konstruktive Ausgestaltung des Palettierers sowie die Einrichtung zur Handhabung der Gegenstände.

Ein Ausführungsbeispiel der erfindungsgemäßen Einrichtung wird nachfolgend anhand der Zeichnungen näher erläutert. Es zeigen:

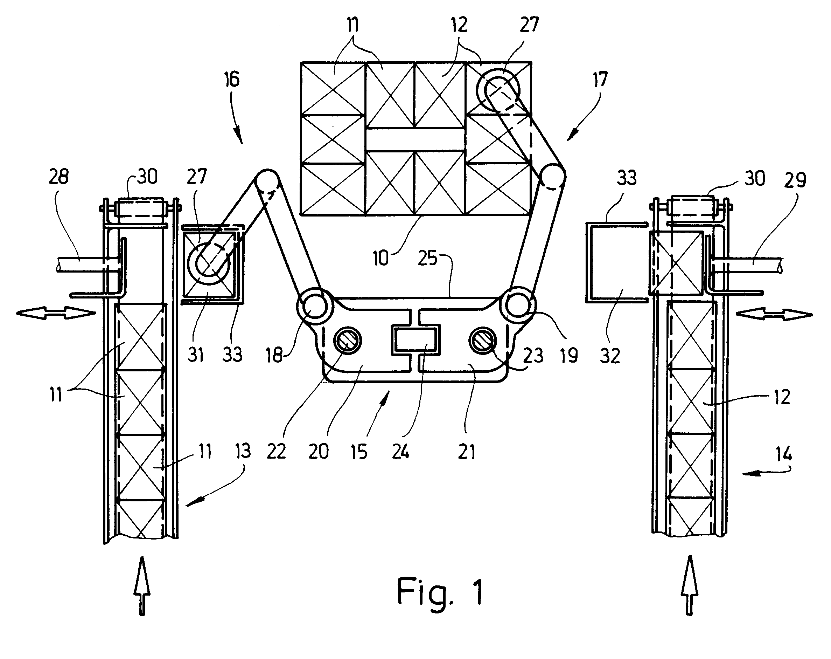

- Fig. 1: eine Einrichtung zum Beladen von Paletten im Grundriß,

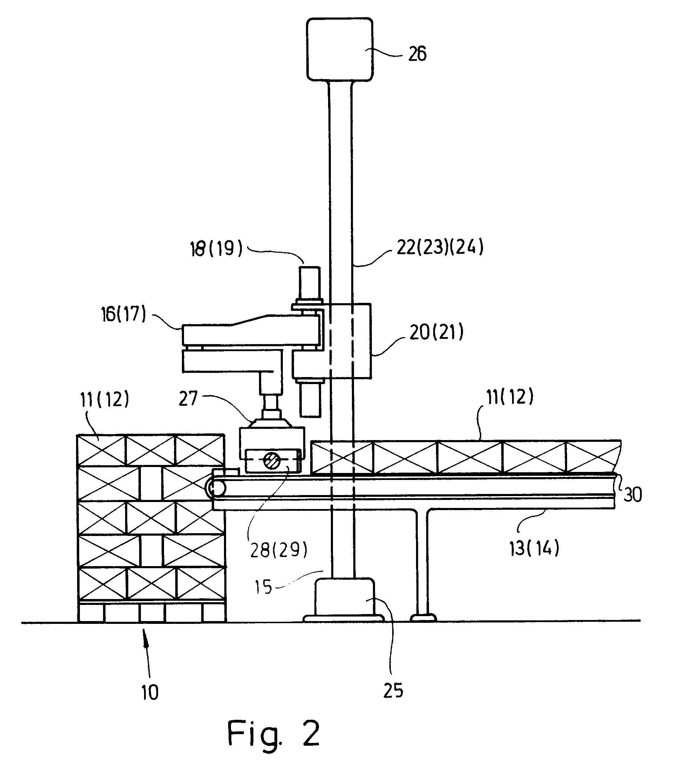

- Fig. 2: die Einrichtung gemäß Fig. 1 in Seitenansicht, wobei aus Gründen der Vereinfachung nur ein Gelenkarm dargestellt ist.

Bei dem in den Zeichnungen dargestellten Ausführungsbeispiel geht es um die Beladung einer einzelnen Palette 10 mit quaderförmigen Gegenständen, nämlich Kartons 11, 12. Diese können den gleichen Inhalt aufweisen, aber auch verschiedenen Inhalt haben.

Die Kartons 11, 12 werden im vorliegenden Falle auf zwei parallel laufenden und im Abstand voneinander angeordneten Zuführförderern 13, 14 der mittig zwischen den Zuführförderern 13, 14 angeordneten Palette 10 zugefördert. Zur Übernahme der Kartons 11, 12 von den Zuführförderern 13, 14 und zum Absetzen auf der Palette 10 dient ein gemeinsamer Palettierer 15. Dieser ist hier mittig zwischen den Zuführförderern 13, 14 positioniert.

Die Besonderheit des Palettierers 15 besteht darin, daß dieser mit zwei Gelenkarmen 16, 17 ausgerüstet ist. Diese sind unabhängig voneinander bewegbar, und zwar sowohl hinsichtlich der Auf- und Abbewegung als auch hinsichtlich der Schwenkbewegungen.

Jeder Gelenkarm 16, 17 ist mit einem (ersten) Gelenk 18, 19 schwenkbar mit einer Halterung verbunden, nämlich einem Führungsblock 20, 21. Dieser wird mit den Gelenkarmen 18, 19 auf- und abbewegt, ist aber unverdrehbar gelagert. Jeder Führungsblock 20, 21 ist auf einer aufrechten, im vorliegenden Falle im Querschnitt kreisflächenförmigen Ständersäule 22, 23 auf- und abbewegbar gelagert, im vorliegenden Falle gleitend. Des weiteren sind die Führungsblöcke 20, 21 mit den einander zugekehrten Seiten an einer gemeinsamen Stützsäule 24 abgestützt. Diese ist hier mit einem rechteckigen Querschnitt ausgebildet. Die Führungsblöcke 20, 21 sind durch U-förmige Ausbildung der einander zugekehrten Seiten mit einer Seitenführung an der Stützsäule 24 abgestützt. In diesem Bereich sind die Führungsblöcke 20, 21 mit Laufrollen ausgestattet, die an jeweils drei Seiten der Stützsäule 24 anliegen.

Die insoweit beschriebenen aufrechten Tragorgane des Palettierers 15, nämlich die beiden Ständersäulen 22, 23 und die Stützsäule 24, sind mit den unteren Enden in einem gemeinsamen Sockel 25 verankert. Die oberen Enden von Ständersäule 22, 23 und Stützsäule 24 sind im vorliegenden Falle durch eine Traverse 26 miteinander verbunden.

Die Gelenkarme 16, 17 sind hinsichtlich der Gestaltung der Gelenke und des Antriebs in herkömmlicher Weise ausgebildet. An den freien Enden der Gelenkarme 16, 17 befindet sich ein Tragorgan für die Gegenstände, im vorliegenden Falle ein Saugkopf 27. Mit diesem werden die Kartons 11, 12 an der Oberseite erfaßt und transportiert.

Jeder Gelenkarm 16, 17 ist einem Zuführförderer 13, 14 zugeordnet. Die in Transportrichtung auf den Zuführförderern 13, 14 jeweils vornliegenden Kartons 11, 12 werden im vorliegenden Falle durch einen querbewegbaren Schieber 28, 29 von einem Transportband 30 in Querrichtung abgeschoben auf eine neben jedem Zuführförderer 13, 14 angeordnete Plattform 31, 32. Von dieser wird jeweils der bereitgestellte Karton 11, 12 durch den zugeordneten Gelenkarm 16, 17 abgenommen. Die Plattformen 31, 32 sind an drei Seiten durch Anschläge 33 begrenzt.

Durch die einstellbaren Anschlagmittel für jeden Gelenkarm 16, 17 kann der Arbeitsbereich derselben verändert werden. Wenn - wie im vorliegenden Falle - beide Zuführförderer 13, 14 fortlaufend Kartons 11, 12 anliefern, sind die Gelenkarme 16, 17 jeweils für die Beladung einer Hälfte der Palette 10 eingerichtet. Es ist aber auch eine ungleiche Verteilung der von jedem Gelenkarm 16, 17 zu beschickenden Fläche der Palette 10 möglich.

## Patentansprüche

1. Einrichtung zum Beladen von Paletten mit quaderförmigen Gegenständen, insbesondere Kartons, durch einen Palettierer (15) mit zwei unabhängig voneinander, an Ständersäulen (22, 23) auf- und abbewegbaren Armen, an deren Enden jeweils ein Saugkopf (27) oder dergleichen angeordnet ist, wobei die Gegenstände dem Palettierer (15) auf mindestens einem Zuführförderer (13, 14) zuführbar sind, **dadurch gekennzeichnet,** daß die Arme als Gelenkarme (16, 17) ausgebildet sind, die jeweils an einem Führungsblock (20, 21) in einer horizontalen Ebene verschwenkbar gelagert sind, wobei jeder Führungsblock (20,21) an je einer Ständersäule (22, 23) auf- und abbewegbar ist, und wobei beide Führungsblöcke (20, 21) außerdem an einer gemeinsamen aufrechten Stützsäule (24) auf- und abwärts verfahrbar gelagert und durch diese zur Durchführung der Schwenkbewegungen abgestützt sind.

2. Einrichtung nach Anspruch 1, dadurch gekennzeichnet, daß die Ständersäulen (22, 23) der Gelenkarme (16, 17) in einem gemeinsamen Sockel (25) verankert sind.

3. Einrichtung nach Anspruch 1 oder 2, dadurch gekennzeichnet, daß die Ständersäulen (22, 23) sowie die vorzugsweise zwischen diesen angeordnete Stützsäule (24) bzw. deren obere Enden durch eine gemeinsame obere Traverse (26) miteinander verbunden sind.

4. Einrichtung nach einem oder mehreren der Ansprüche 1 bis 3, dadurch gekennzeichnet, daß die Stützsäule (24) einen rechteckigen oder quadratischen Querschnitt aufweist und daß die Führungsblöcke (20, 21) der Gelenkarme (16, 17) an zwei einander gegenüberliegenden Seiten der Stützsäule (24) abgestützt sind.

5. Einrichtung nach Anspruch 4, dadurch gekennzeichnet, daß die Führungsblöcke (20, 21) der Gelenkarme (16, 17) über Gleitlager bzw. Laufrollen an den einander gegenüberliegenden Seiten der Stützsäule (24) abgestützt sind.

6. Einrichtung nach Anspruch 4 oder 5, dadurch gekennzeichnet, daß die Führungsblöcke (20, 21) der Gelenkarme (16, 17) die Stützsäule (24) jeweils teilweise umfassen.

7. Einrichtung nach einem oder mehreren der Ansprüche 1 bis 6, dadurch gekennzeichnet, daß die Stützsäule (24) mittig im Sockel (25) verankert ist.

8. Einrichtung nach einem oder mehreren der Ansprüche 1 bis 7, dadurch gekennzeichnet, daß die Gelenkarme (16, 17) durch verstellbare mechanische bzw. elektronische Anschlagmittel hinsichtlich des Schwenkwinkels begrenzbar sind, derart, daß zwei getrennt voneinander wirksame Arbeitsbereiche, von denen jeder einem Gelenkarm (16, 17) zugeordnet ist, ausgebildet sind.

9. Einrichtung nach einem oder mehreren der Ansprüche 1 bis 8, dadurch gekennzeichnet, daß die zu palettierenden Kartons (11, 12) auf zwei getrennt voneinander sich gegenüberliegenden, parallel angeordneten, vorzugsweise bandförmigen Zuführförderern (13, 14) dem Palettierer (15) zuführbar sind, wobei jeweils ein Zuführförderer (13, 14) einem Gelenkarm (16, 17) des Palettierers (15) zugeordnet ist.

10. Einrichtung nach einem oder mehreren der Ansprüche 1 bis 9, dadurch gekennzeichnet, daß beide Gelenkarme (16, 17) geeignete Steuerorgane und Anschläge aufweisen, die die Arbeitsbereiche der Gelenkarme (16, 17) derart begrenzen, daß jeder Gelenkarm (16, 17) zur Bedienung einer Hälfte der zu beladenden Palette (10) gestaltet ist.

11. Einrichtung nach einem oder mehreren der Ansprüche 1 bis 10, dadurch gekennzeichnet, daß jedem Zuführförderer (13, 14) ein Abnahmetisch zugeordnet ist, bestehend aus einer Plattform (31, 32) mit dreiseitiger Begrenzung (Anschläge 33) sowie einem der Plattform (31, 32) gegenüberliegenden Schieber (28, 29) dessen Bewegungsrichtung quer zu der des Zuführförderers (13, 14) verläuft zum Aufschieben der Gegenstände (11, 12) vom Zuführförderer (13, 14) auf die Plattform (31, 32).

## Claims

1. Apparatus for loading cuboidal articles, in particular cartons, onto pallets by means of a palletizer (15), having two mutually independent arms which can move up and down on columns (22, 23) and at the ends of which there is arranged in each case one suction head (27) or the like, it being possible for the articles to be fed to the palletizer (15) on at least one feed conveyor (13, 14), characterized in that the arms are designed as articulated arms (16, 17) which are each mounted on a guide block (20, 21) such that they can pivot in a horizontal plane, it being possible for each guide block (20, 21) to move up and down on in each case one column (22, 23), and the two guide blocks (20, 21), moreover, being mounted on a common upright supporting column (24), such that they can be displaced upwards and downwards, and being supported by said upright supporting column in order to carry out the pivot movements.

2. Apparatus according to Claim 1, characterized in that the columns (22, 23) of the articulated arms (16, 17) are anchored in a common base (25).

3. Apparatus according to Claim 1 or 2, characterized in that the columns (22, 23) and the supporting column (24), preferably arranged between said columns (22, 23), or the upper ends thereof are connected to one another by a common top crossmember (26).

4. Apparatus according to one or more of Claims 1 to 3, characterized in that the supporting column (24) has a rectangular or square cross-section, and in that the guide blocks (20, 21) of the articulated arms (16, 17) are supported on two mutually opposite sides of the supporting column (24).

5. Apparatus according to Claim 4, characterized in that the guide blocks (20, 21) of the articulated arms (16, 17) are supported on the mutually opposite sides of the supporting column (24) via slide bearings or rollers.

6. Apparatus according to Claim 4 or 5, characterized in that the guide blocks (20, 21) of the articulated arms (16, 17) each partially enclose the supporting column (24).

7. Apparatus according to one or more of Claims 1 to 6, characterized in that the supporting column (24) is anchored centrally in the base (25).

8. Apparatus according to one or more of Claims 1 to 7, characterized in that the articulated arms (16, 17) can be restricted, in terms of the pivot angle, by adjustable mechanical and/or electronic stop means such that two operating ranges, which operate separately from one another and of which each is assigned to one articulated arm (16, 17), are formed.

9. Apparatus according to one or more of Claims 1 to 8, characterized in that the cartons (11, 12) to be palletized can be fed to the palletizer (15) on two feed conveyors (13, 14) which are separately arranged opposite one another in parallel and are preferably in the form of belts, in each case one feed conveyor (13, 14) being assigned to one articulated arm (16, 17) of the palletizer (15).

10. Apparatus according to one or more of Claims 1 to 9, characterized in that the two articulated arms (16, 17) exhibit suitable control members and stops which delimit the operating ranges of the articulated arms (16, 17) such that each articulated arm (16, 17) is configured to serve one half of the pallet (10) to be loaded.

11. Apparatus according to one or more of Claims 1 to 10, characterized in that each feed conveyor (13, 14) is assigned a removal table, composed of a platform (31, 32) which is delimited on three sides (stops 33) and of a pusher (28, 29) which is located opposite the platform (31, 32) and whose direction of movement runs transversely with respect to that of the feed conveyor (13, 14) in order to push the articles (11, 12) from the feed conveyor (13, 14) onto the platform (31, 32).

## Revendications

1. Dispositif de chargement de palettes avec des objets parallélépipédiques, en particulier des cartons, au moyen d'un palettiseur (15) ayant deux bras pouvant monter et descendre indépendamment l'un de l'autre sur des colonnes supports (22,23) et à l'extrémité de chacun desquels est placée une tête aspirante (27) ou un élément semblable, les objets pouvant être amenés au palettiseur (15) sur au moins un transporteur d'alimentation (13,14), caractérisé par le fait que les bras sont des bras articulés (16,17) qui sont montés pivotants dans un plan horizontal chacun sur un bloc de guidage (20,21), chaque bloc de guidage (20,21) pouvant monter et descendre sur l'une des colonnes supports (22,23) et les deux blocs de guidage (20,21) étant en outre montés mobiles verticalement sur une colonne d'appui commune (24) et calés par celle-ci pour l'exécution des mouvements de pivotement.

2. Dispositif selon la revendication 1, caractérisé par le fait que les colonnes (22,23) de support des bras articulés (16,17) sont ancrées dans un socle commun (25).

3. Dispositif selon l'une des revendications 1 et 2, caractérisé par le fait que les colonnes de support (22,23) et la colonne d'appui (24), placée de préférence entre celles-ci, sont réunies à leurs extrémités supérieures par une traverse supérieure commune (26).

4. Dispositif selon une ou plusieurs des revendications 1 à 3, caractérisé par le fait que la colonne d'appui (24) est de section rectangulaire ou carrée et que les blocs (20,21) de guidage des bras articulés (16,17) sont en appui sur deux côtés opposés de la colonne d'appui (24).

5. Dispositif selon la revendication 4, caractérisé par le fait que les blocs (20,21) de guidage des bras articulés (16,17) s'appuient sur les côtés opposés de la colonne d'appui (24) par des paliers lisses ou des galets de roulement.

6. Dispositif selon l'une des revendications 4 et 5, caractérisé par le fait que les blocs (20,21) de guidage des bras articulés (16,17) embrassent chacun en partie la colonne d'appui (24).

7. Dispositif selon une ou plusieurs des revendications 1 à 6, caractérisé par le fait que la colonne d'appui (24) est ancrée au milieu dans le socle (25).

8. Dispositif selon une ou plusieurs des revendications 1 à 7, caractérisé par le fait que l'angle de pivotement des bras articulés (16,17) peut être limité par des moyens de butée mécaniques ou électroniques réglables de façon telle que soient formées deux zones de travail affectées chacune à un bras articulé (16,17) et actives séparément l'une de l'autre.

9. Dispositif selon une ou plusieurs des revendications 1 à 8, caractérisé par le fait que les cartons à palettiser (11,12) sont amenés au palettiseur (15) sur deux transporteurs d'alimentation (13,14) de préférence en forme de bande placés parallèlement et se faisant face séparés l'un de l'autre, chacun étant associé à un bras articulé (16,17) du palettiseur (15).

10. Dispositif selon une ou plusieurs des revendications 1 à 9, caractérisé par le fait que les deux bras articulés (16,17) présentent des organes de commande et des butées appropriés qui limitent les zones de travail de ceux-ci de façon telle que chacun serve une moitié des palettes (10) à charger.

11. Dispositif selon une ou plusieurs des revendications 1 à 10, caractérisé par le fait qu'à chaque transporteur d'alimentation (13,14) est adjointe une table de réception constituée d'une plate-forme (31,32) à limitation sur trois côtés (butées 33) et d'un poussoir (28,29) situé en face de cette plate-forme (31,32) et dont la direction de mouvement est perpendiculaire à celle du transporteur d'alimentation (13,14) pour le glissement des objets (11,12) du transporteur d'alimentation (13,14) à la plate-forme (31,32).
